(19) Europäisches Patentamt / European Patent Office / Office européen des brevets

(11) **EP 3 956 378 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **20716824.6**

(22) Anmeldetag: **09.04.2020**

(51) Internationale Patentklassifikation (IPC):
***C08G 59/50*** *(2006.01)*

(52) Gemeinsame Patentklassifikation (CPC):
**C08J 5/244; C08G 59/5006; C08J 5/042; C08J 5/043; C08J 5/047; C08J 5/243; C08J 5/249;** C08J 2363/00

(86) Internationale Anmeldenummer:
**PCT/EP2020/060220**

(87) Internationale Veröffentlichungsnummer:
**WO 2020/212258 (22.10.2020 Gazette 2020/43)**

(54) **EPOXIDHARZ-BASIERTE FASER-MATRIX-ZUSAMMENSETZUNGEN MIT ALKYL-SUBSTITUIERTEN ETHYLENAMINEN**

EPOXY RESIN-BASED FIBRE-MATRIX COMPOSITIONS WITH ALKYL-SUBSTITUTED ETHYLENE AMINES

COMPOSITIONS À MATRICE FIBREUSE À BASE DE RÉSINE ÉPOXYDE COMPORTANT DES ÉTHYLÈNEAMINES SUBSTITUÉES PAR UN ALKYLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2019 EP 19170220**

(43) Veröffentlichungstag der Anmeldung:
**23.02.2022 Patentblatt 2022/08**

(73) Patentinhaber: **BASF SE**
**67056 Ludwigshafen (DE)**

(72) Erfinder:
- **KOPCZYNSKI, Matthaeus**
  **67056 Ludwigshafen (DE)**
- **ALTENHOFF, Ansgar Gereon**
  **67056 Ludwigshafen (DE)**
- **KOLASSA, Dieter**
  **67056 Ludwigshafen (DE)**
- **ZIPFEL, Hannes Ferdinand**
  **67056 Ludwigshafen (DE)**
- **EIDAMSHAUS, Christian**
  **67056 Ludwigshafen (DE)**
- **PASTRE, Joerg**
  **67056 Ludwigshafen (DE)**

(74) Vertreter: **BASF IP Association**
**BASF SE**
**GBI-C006**
**67056 Ludwigshafen (DE)**

(56) Entgegenhaltungen:
**EP-A1- 0 133 154**
**DE-T2- 69 629 616**
**US-A1- 2011 028 603**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die vorliegende Erfindung betrifft Epoxidharz-basierte Faser-Matrix-Zusammensetzungen mit Alkyl-substituierten Ethylenaminen wie bspw. Dimethyldiethylentriamin (DMDETA, auch Dimethyl-1,4,7-triazaheptan) als Härter. Die Erfindung betrifft weiter Verfahren zur Herstellung von gehärteten Verbundmaterialen aus der Faser-Matrix-Zusammensetzung, insbesondere Strangzieh- und Wickelverfahren, sowie die damit erhältlichen gehärteten Verbundmaterialien.

Epoxidharze sind allgemein bekannt und werden aufgrund ihrer Zähigkeit, Flexibilität, Haftung und chemischen Beständigkeit als Materialien zur Oberflächenbeschichtung, als Klebstoffe und zum Formen und Laminieren verwendet sowie zur Herstellung von faserverstärkten Verbundmaterialien.

Ausgehend von Epoxidverbindungen mit mindestens zwei Epoxidgruppen kann beispielsweise mit einer Aminoverbindung mit zwei Aminogruppen eine Härtung durch eine Polyadditionsreaktion (Kettenverlängerung) erfolgen. Aminoverbindungen mit hoher Reaktivität werden im Allgemeinen erst kurz vor der gewünschten Härtung zugesetzt. Bei solchen Systemen handelt es sich daher um sogenannte "zwei Komponenten Systeme" (2K-Systeme).

Grundsätzlich werden aminische Härter (Aminohärter) nach ihrer chemischen Struktur in aliphatische, cycloaliphatische oder aromatische Typen eingeteilt. Zusätzlich ist eine Klassifizierung anhand des Substitutionsgrads der Aminogruppe möglich, die entweder primär, sekundär oder auch tertiär sein kann. Für die tertiären Amine wird allerdings ein katalytischer Härtungsmechanismus von Epoxidharzen postuliert, wohingegen für die sekundären und primären Amine jeweils stöchiometrische Härtungsreaktionen zum Aufbau des Polymernetzwerks zugrunde gelegt werden.

Im Allgemeinen ist gezeigt worden, dass innerhalb der primären Aminohärter die aliphatischen Amine die höchste Reaktivität bei der Epoxidhärtung zeigen. Etwas langsamer reagieren üblicherweise die cycloaliphatischen Amine, wohingegen die aromatischen Amine (Amine, bei denen die Aminogruppen direkt an einem C-Atom des aromatischen Rings gebunden sind) mit Abstand die geringste Reaktivität aufweisen.

Diese bekannten Reaktivitätsunterschiede werden bei der Aushärtung von Epoxidharzen genutzt, um die Verarbeitungszeit und die Härtungsgeschwindigkeit bedarfsgerecht einstellen zu können. Für die Herstellung von faserverstärkten Verbundmaterialien (Composites) ist es wünschenswert, wenn die zur Einbettung bzw. Imprägnierung der Verstärkungsfasern eingesetzte Epoxidharz-Zusammensetzung (Matrix-Komponente) eine möglichst lange Verarbeitungszeit (Topfzeit: Zeitraum, in dem die Zusammensetzung verarbeitet werden kann) aufweist. Bei der Herstellung von Composites mittels Strangziehverfahren (Pultrusion), Infusions- bzw. Injektionsverfahren wie Vakuuminfusion (VARTM) oder Spritzpressen (RTM) ist eine ausreichend lange Verarbeitungszeit erforderlich, damit die Matrix-Komponente die Verstärkungsfasern gut benetzt und sich gleichmäßig um die Verstärkungsfasern verteilt, insbesondere bei der Herstellung von großen Bauteilen. Aus dem gleichen Grund ist auch eine geringe Mischviskosität der Matrix-Komponente wünschenswert. Gleichzeitig soll die Matrix-Komponente bei erhöhter Temperatur in akzeptabler Zeit aushärten, um kurze Herstellungszyklen und damit eine hohe Produktivität zu ermöglichen.

Cycloaliphatische Amine wie beispielsweise das Isophorondiamin (IPDA) ermöglichen eine vergleichsweise lange Verarbeitungszeit und, bei geeigneter Formulierung, gleichzeitig auch eine hohe Härtungsgeschwindigkeit und geringe Mischviskosität (Ullmann's Encyclopedia of Industrial Chemistry, Wiley-VCH, Weinheim, Germany, 2012, Vol. 13, Epoxy Resins, H. Pham & M. Marks, chpt. 15.1.1.2, Tab. 14 (online: 15.10.2005, DOI: 10.1002/14356007.a09_547.pub2)). Zudem zeichnen sich Epoxidharze, die mit cycloaliphatischen Aminen wie IPDA gehärtet wurden, in der Regel durch eine hohe Glasübergangstemperatur aus. Daher werden cycloaliphatische Amine auch insbesondere für die Herstellung von Composites eingesetzt. Aromatische Amine und Anhydride, die ebenfalls bei der Herstellung von Composites eingesetzt werden, haben den Nachteil, dass lange Härtungszeiten bzw. hohe Härtungstemperaturen erforderlich sind. Zudem führt die Härtung mit Anhydriden in der Regel zu eher spröden Harzen. EP2307358 A beschreibt, dass durch Zugabe von Tetramethylguanidin bei einer Epoxidharz-Härtung mit IPDA und Polyetheramin D230 gleichzeitig die Topfzeit verlängert und die Aushärtungsgeschwindigkeit erhöht werden kann. Allerdings weisen die dort beschriebenen Systeme vergleichsweise geringe Glasübergangstemperaturen auf.

Besondere Anforderungen an die härtbare Zusammensetzung stellt die Herstellung von Composites mittels Strangziehverfahren (Pultrusion). Beim Strangziehverfahren werden Bündel aus langen Fasern (bspw. Glas-, Carbon- oder Aramid-Fasern) in einem kontinuierlichen Prozess durch eine Vorrichtung gezogen, in der die Faserbündel zunächst mit einer härtbaren Zusammensetzung (Matrix-Komponente) imprägniert und anschließend bei erhöhter Temperatur zum Verbundbauteil (Pultrusionsprofile) ausgehärtet werden. Als Matrix-Komponente werden in der Regel härtbare Zusammensetzungen auf Basis von Polyesterharzen oder Epoxidharzen eingesetzt. Die Imprägnierung der Fasern kann bspw. dadurch erfolgen, dass die Fasern durch ein Bad mit der Matrix-Komponente gezogen werden (Wannenverfahren oder "resin bath-based pultrusion"), oder dass die Matrix-Komponente unter Druck zwischen die Fasern injiziert wird (Einspritzverfahren oder "resin-injection pultrusion"). Zur Aushärtung und Formgebung wird der imprägnierte Faserstrang durch eine Heizstrecke gezogen, wo die Matrix-Komponente bei Temperaturen im Bereich von 100 bis 200 °C härtet. Für das Strangziehverfahren muss die Matrix-Komponente zum einen eine ausreichend lange Topfzeit für die Durchführung des Imprägnierungsschritts aufweisen, zum anderen aber auch bei erhöhter Temperatur schnell aushärten. Die Härtungsgeschwindigkeit limitiert die Geschwindigkeit, mit der der Faserstrang durch die Heizstrecke gezogen werden

kann, und somit den Durchsatz des Verfahrens. In der Praxis werden als Matrix-Komponente üblicherweise Epoxidharz-Systeme eingesetzt, die auf einem Anhydrid als Härter in Kombination mit einem Beschleuniger (bspw. Imidazole oder tertiäre Amine) basieren (beschrieben bspw. in 2012 veröffentlichten technischen Datenblättern der Firma Huntsman zu Mischungen aus Araldite® LY 1564 (Mischung aus Bisphenol A Epoxidharz und Reaktivverdünner Butandioldiglycidylether), Aradur® 917 (Mischung aus 4-Methyltetrahydrophthalsäureanhydrid und Tetrahydrophthalsäureanhydrid) und Accelerator 960-1 (2,4,6-Tris(dimethylaminomethyl)phenol) bzw. zu Mischungen aus Araldite® LY 1556 (Bisphenol A Epoxidharz), Aradur® 917 und Accelerator DY 070 (1-Methylimidazol)). Nachteiliger Weise ergibt die Anhydridhärtung von Epoxidharzen im Unterschied zu der Aminohärtung vergleichsweise spröde Produkte (Lee & Neville, Handbook of Epoxy Resins (1967), S. 12-36f).

WO2016/177533 beschreibt ein Strangziehverfahren (Pultrusion) zur Herstellung von Bewehrungsstäben mit einer Matrix-Komponente aus Epoxidharz und Aminohärter, beispielsweise IPDA. Durch den Einsatz von IPDA anstelle eines Anhydridhärters wird demnach eine verbesserte Alkalistabilität und eine höhere Glasübergangstemperatur erreicht. Die Topfzeit bei IPDAbasierten Epoxidharz-Systemen ist zwar deutlich geringer als von Anhydridhärter basierten Systemen, reicht aber für die Anwendung im Strangziehverfahren aus.

EP0133154A1 offenbart einen mit einer härtbaren Epoxidharzmatrix imprägnierten Faserverbund, enthaltend ein aliphatisches primäres Monoamin.

Vor diesem Hintergrund sind daher insbesondere für das Strangziehverfahren (Pultrusion) Epoxidharz-basierte Faser-Matrix-Zusammensetzungen mit Aminohärtern gesucht, die sich ähnlich wie die Epoxidharz-Systeme mit dem bekannten cycloaliphatischen Aminohärter IPDA durch eine vergleichsweise lange Topfzeit und eine geringe Mischviskosität bei Raumtemperatur (23 °C) auszeichnen, sowie zu gehärten Epoxidharzen mit hoher Glasübergangstemperatur und guten mechanischen Eigenschaften (wie insbesondere eine geringe Sprödigkeit) führen, gleichzeitig aber höhere Härtungsgeschwindigkeiten bei mittleren Härtungstemperaturen, bspw. 70 bis 180 °C, insbesondere 90 bis 150 °C, ermöglichen.

Der Erfindung liegt die Aufgabe zugrunde, insbesondere für das Strangziehverfahren (Pultrusion), solche Epoxidharz-basierte Faser-Matrix-Zusammensetzungen mit verbesserter Härtungsgeschwindigkeit bei mittleren Härtungstemperaturen von 70 bis 180 °C, insbesondere 90 bis 150 °C, bei gleichzeitig vergleichsweise langer Topfzeit und geringer Mischviskosität bei Raumtemperatur bereitzustellen. Vorzugsweise sollte die Zusammensetzung ähnlich hohe Glasübergangstemperaturen und gute mechanische Eigenschaften (insbesondere geringe Sprödigkeit) für das gehärtete Harz ermöglichen wie die Zusammensetzung aus Epoxidharz und dem cycloaliphatischen Aminohärter IPDA.

Im Rahmen dieser Erfindung wurde gefunden, dass der Einsatz von Alkyl-substituierten Ethylenaminen wie bspw. Dimethyldiethylentriamin (DMDETA), obschon strukturell ein aliphatisches Amin, eine mit dem cycloaliphatischen Aminohärter IPDA vergleichbare Topfzeit und Mischviskosität bei Raumtemperatur aufweist, sowie zu einem gehärteten Epoxidharz mit ähnlicher Glasübergangstemperatur und ähnlich guten mechanischen Eigenschaften führt, gleichzeitig aber bei einer mittleren Härtungstemperatur von 70 bis 180 °C, insbesondere 90 bis 150 °C, besonders schnell härtet, und somit besonders gut geeignet ist für den Einsatz beim Strangziehverfahren (Pultrusion). Alkyl-substituierte Ethylenamine wie bspw. DMDETA vereinen in unerwarteter Weise die für aliphatische Amine typische schnelle Härtung mit den für cycloaliphatische Amine typischen längeren Topfzeiten und höheren Glasübergangstemperaturen.

Entsprechend betrifft die vorliegende Erfindung eine Faser-Matrix-Zusammensetzung, mit einer Faserkomponente, bestehend aus Verstärkungsfasern, und einer Matrix-Komponente, die Epoxidharz und Härter umfasst, dadurch gekennzeichnet, dass der Härter mindestens ein Alkyl-substituiertes Ethylenamin der Formel I,

$$H_2N\text{-}A\text{-}(NH\text{-}A\text{-})_nNH_2 \qquad (I),$$

wie bspw. Dimethyldiethylentriamin (DMDETA), umfasst,

wobei A unabhängig voneinander eine Ethylengruppe der Formel $-CHR-CH_2-$ oder $-CH_2-CHR-$, mit R = H, Ethyl oder Methyl,
mindestens jedoch ein A des Alkyl-substituierten Ethylenamins der Formel I eine Alkylethylengruppe der Formel $-CHR-CH_2-$ oder $-CH_2-CHR-$, mit R = Ethyl oder Methyl, ist, und
wobei n = 1 bis 4, vorzugsweise n = 1 oder 2, insbesondere n = 1 ist.
In einer bevorzugten Ausführungsform ist das erfindungsgemäße Alkyl-substituiertes Ethylenamin eine Verbindung der Formel I,
wobei A unabhängig voneinander eine Methylethylengruppe der Formel $-CH(CH_3)-CH_2-$ oder $-CH_2-CH(CH_3)-$ ist, und wobei n = 1 bis 4, vorzugsweise n = 1 oder 2 ist.

In einer besonders bevorzugten Ausführungsform handelt es sich bei dem erfindungsgemäßen Alkyl-substituierten Ethylenamin um Dimethyldiethylentriamin (DMDETA), eine Verbindung der Formel II oder ein Isomerengemisch mehrerer Verbindungen der Formel II,

$$H_2N\text{-}A\text{-}NH\text{-}A\text{-}NH_2 \qquad (II),$$

wobei A unabhängig voneinander eine Methylethylengruppe der Formel
$-CH(CH_3)-CH_2-$ oder $-CH_2-CH(CH_3)-$
ist. Vorzugsweise ist das erfindungsgemäße DMDETA ein Isomer der Formel IIa, IIb oder IIc, oder ein Gemisch der Isomeren der Formeln IIa, IIb und IIc (bzw. ein Gemisch von zwei dieser drei Isomere),

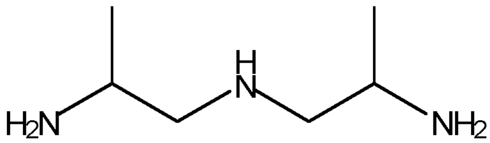

(IIa),

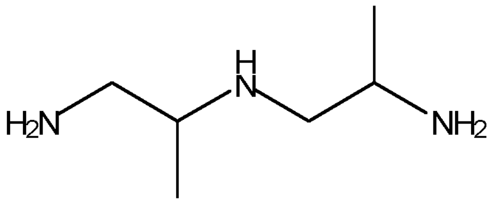

(IIb),

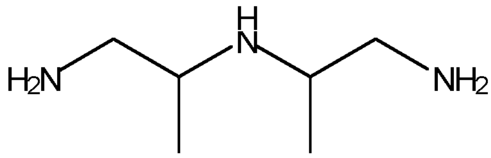

(IIc).

Bei dem erfindungsgemäßen Einsatz von DMDETA-Isomerengemischen werden insbesondere Gemische eingesetzt, die im Wesentlichen aus den Verbindungen der Formeln IIa und IIb bestehen. Diese Gemische bestehen beispielsweise zu mindestens 60 Gew.-%, insbesondere zu mindestens 80 Gew.-% aus den Verbindungen der Formeln IIa und IIb.

Das empirische Aminohärter-Äquivalentgewicht (empiric amine hardener equivalent weight, $AHEW_{emp}$) des erfindungsgemäßen DMDETA ist vorzugsweise in dem Bereich von 25 bis 30 g/eq.

Die grundsätzliche Verwendbarkeit von DMDETA als Härter für Epoxidharze wurde von Akhmadeyeva und Zagidullin (edited by Mukmeneva, Materialy Yubileinoi Nauchno-Metodicheskoi Konferentsii "III Kirpichnikovskie Chteniya", Kazan, Russian Federation, Mar. 25-28, 2003, S. 473-475) erwähnt, ohne näher darauf einzugehen.

Epoxidharze gemäß dieser Erfindung besitzen üblicherweise 2 bis 10, bevorzugt 2 bis 6, ganz besonders bevorzugt 2 bis 4 und insbesondere 2 Epoxidgruppen. Bei den Epoxidgruppen handelt es sich insbesondere um Glycidylethergruppen, wie sie bei der Umsetzung von Alkoholgruppen mit Epichlorhydrin entstehen. Bei den Epoxidharzen kann es sich um niedermolekulare Verbindungen, welche im Allgemeinen ein mittleres Molgewicht ($M_n$) kleiner 1.000 g/mol haben oder um höhermolekulare Verbindungen (Polymere) handeln. Solche polymeren Epoxidharze haben bevorzugt einen Oligomerisierungsgrad von 2 bis 25, besonders bevorzugt von 2 bis 10 Einheiten. Es kann sich um aliphatische, auch cycloaliphatische Verbindungen oder um Verbindungen mit aromatischen Gruppen handeln. Insbesondere handelt es sich bei den Epoxidharzen um Verbindungen mit zwei aromatischen oder aliphatischen 6-Ringen oder deren Oligomere. Technisch von Bedeutung sind Epoxidharze, die durch Umsetzung des Epichlorhydrins mit Verbindungen, welche mindestens zwei reaktive H-Atome haben, insbesondere mit Polyolen, erhältlich sind. Von besonderer Bedeutung sind Epoxidharze, die durch Umsetzung des Epichlorhydrins mit Verbindungen, welche mindestens zwei, vorzugsweise zwei Hydroxylgruppen und zwei aromatische oder aliphatische 6-Ringe enthalten, erhältlich sind. Als derartige Verbindungen seien insbesondere Bisphenol A und Bisphenol F, sowie hydriertes Bisphenol A und Bisphenol F genannt - die entsprechenden Epoxidharze sind die Diglycidylether von Bisphenol A oder Bisphenol F, oder hydriertem Bisphenol A oder Bisphenol F. Als Epoxidharz gemäß dieser Erfindung wird üblicherweise Bisphenol-A-diglycidylether (DGEBA) verwendet. Geeignete Epoxidharze gemäß dieser Erfindung sind auch Tetraglycidyl-Methylendianilin (TGMDA) und Triglycidylaminophenol oder Gemische davon. In Betracht kommen auch Umsetzungsprodukte

des Epichlorhydrins mit anderen Phenolen, z.B. mit Kresolen oder Phenol-Aldehyd-Addukten, wie Phenolformaldehydharzen, insbesondere Novolaken. Geeignet sind auch Epoxidharze, welche sich nicht vom Epichlorhydrin ableiten. In Betracht kommen z.B. Epoxidharze, welche Epoxidgruppen durch Umsetzung mit Glycidyl(meth)acrylat) enthalten. Vorzugsweise werden erfindungsgemäß Epoxidharze oder Gemische davon eingesetzt, die bei Raumtemperatur (23 °C) flüssig sind. Das Epoxid-Äquivalenzgewicht (EEW) gibt die durchschnittliche Masse des Epoxidharzes in g pro Mol Epoxidgruppe an.

Vorzugsweise besteht die Matrix-Komponente der erfindungsgemäßen Faser-Matrix-Zusammensetzung zu mindestens 50 Gew.-% aus Epoxidharz.

In einer besonderen Ausführungsform kann die erfindungsgemäße Faser-Matrix-Zusammensetzung zusätzlich Reaktivverdünner umfassen. Reaktivverdünner im Sinne der Erfindung sind Verbindungen, die die Mischviskosität (auch Anfangsviskosität) der härtbaren Zusammensetzung herabsetzen und im Verlauf der Härtung der härtbaren Zusammensetzung mit dem sich ausbildenden Netzwerk aus Epoxidharz und Härter eine chemische Bindung eingehen. Bevorzugte Reaktivverdünner im Sinne dieser Erfindung sind niedermolekulare organische, vorzugsweise aliphatische Verbindungen mit ein oder mehreren Epoxidgruppen.

Erfindungsgemäße Reaktivverdünner sind vorzugsweise ausgewählt aus der Gruppe bestehend aus 1,4-Butandiolbisglycidylether, 1,6-Hexandiolbisglycidylether (HDDE), Glycidylneodecanoat, Glycidylversatat, 2-Ethylhexylglycidylether, Neopentylglykoldiglycidylether, p-tert-Butylglycidether, Butylglycidether, C8-C10- Alkylglycidylether, C12-C14- Alkylglycidylether, Nonylphenylglycidether, p-tert-Butylphenylglycidether, Phenylglycidether, o-Cresylglycidether, Polyoxypropylenglycoldiglycidether, Trimethylolpropantriglycidether (TMP), Glycerintriglycidether, Triglycidylparaaminophenol (TGPAP), Divinylbenzyldioxid und Dicyclopentadiendiepoxid. Sie sind besonders bevorzugt ausgewählt aus der Gruppe bestehend aus 1,4-Butandiolbisglycidylether, 1,6-Hexandiolbisglycidylether (HDDE), 2-Ethylhexylglycidylether, C8-C10- Alkylglycidylether, C12-C14- Alkylglycidylether, Neopentylglykoldiglycidylether, p-tert-Butylglycidether, Butylglycidether, Nonylphenylglycidether, p-tert-Butylphenylglycidether, Phenylglycidether, o-Cresylglycidether, Trimethylolpropantriglycidether (TMP), Glycerintriglycidether, Divinylbenzyldioxid und Dicyclopentadiendiepoxid. Sie sind insbesondere ausgewählt aus der Gruppe bestehend aus 1,4-Butandiolbisglycidylether, C8-C10- Alkylmonoglycidylether, C12-C14- Alkylmonoglycidylether, 1,6-Hexandiolbisglycidylether (HDDE), Neopentylglykoldiglycidylether, Trimethylolpropantriglycidether (TMP), Glycerintriglycidether und Dicyclopentadiendiepoxid.

Die erfindungsgemäßen Reaktivverdünner machen vorzugsweise einen Anteil bis 30 Gew.-%, besonders bevorzugt bis 25 Gew.-%, insbesondere von 1 bis 20 Gew.-% bezogen auf die Epoxidharz-Menge aus.

Der Härter der erfindungsgemäßen Matrix-Komponente kann neben dem erfindungsgemäßen Alkyl-substituierten Ethylenamin noch weitere aliphatische, cycloaliphatische und aromatisch Polyamine oder weitere primäre Monoamine enthalten. Als zusätzliche aliphatische, cycloaliphatische oder aromatische Polyamine eignen sich beispielsweise Dicykan, Dimethyldicykan (DMDC), Isophorondiamin (IPDA), Diethylentriamin (DETA), Triethylentetramin (TETA), Tetraethylenpentamin (TEPA), 1,3-Bis(aminomethyl)cyclohexan (1,3-BAC), Bis(p-aminocyclohexyl)methan (PACM), Methylendianilin (bspw. 4,4'-Methylendianilin), Polyetheramine, wie Polyetheramin D230, Polyetheramin D400, Polyetheramin D2000 oder Polyetheramin T403, 4,9-Dioxa-1,12-dodecandiamin (DODA), 4,7,10-Trioxatridecan-1,13-diamin (TTD) Polyaminoamide wie Versamid 140, Diaminodiphenylmethan (DDM), Diaminodiphenylsulfon (DDS), 2,4-Toluoldiamin, 2,6-Toluoldiamin, 4-Methylcyclohexan-1,3-diamin, 2-Methylcyclohexan-1,3-diamin, Mischungen aus 4-Methylcyclohexan-1,3-diamin und 2-Methylcyclohexan-1,3-diamin (MCDA), 1,2-Diaminocyclohexan (DACH), 2,4-Diamino-3,5-diethyltoluol, 2,6-Diamino-3,5-diethyltoluol (DETDA), 1,2-Diaminobenzol, 1,3-Diaminobenzol, 1,4-Diaminobenzol, Diaminodiphenyloxid, 3,3',5,5'-Tertramethyl-4,4'-diaminodiphenyl, 3,3'-Dimethyl-4,4'-diaminodiphenyl, 1,12-Diaminododecan, 1,10-Diaminodecan, 1,5-Diaminopentan (Cadaverin), 1,2-Propandiamin, 1,3-Propandiamin, 2,2'-Oxy-bis(ethylamin), 3,3'-Dimethyl-4,4'-diaminodicyclohexylmethan, 4-Ethyl-4-methylamino-1-octylamin, Ethylendiamin, Hexamethylendiamin, Menthendiamin, meta-Xylylendiamin (MXDA), Reaktionsprodukte von 1,3-Benzoldimethanamin mit Styrol (Gaskamine® 240), N-(2-Aminoethyl)piperazin (AEPIP), Neopentandiamin, Norbornandiamin, Dimethylaminopropylaminopropylamin (DMAPAPA), Octanmethylendiamin, 4,8-Diamino-tricyclo[5.2.1.0]decan, Trimethylhexamethylendiamin, und Piperazin. Bevorzugt geeignet als zusätzliche aliphatische, cycloaliphatische oder aromatisch Polyamine sind Dicykan, Dimethyldicykan (DMDC), Isophorondiamin (IPDA), Diethylentriamin (DETA), Triethylentetramin (TETA), Tetraethylenpentamin (TEPA), 1,3-Bis(aminomethyl)cyclohexan (1,3-BAC), Bis(p-aminocyclohexyl)methan (PACM), Polyetheramine, wie Polyetheramin D230, Polyetheramin D400, Polyetheramin D2000 oder Polyetheramin T403, 4,9-Dioxa-1,12-dodecandiamin (DODA), 4,7,10-Trioxatridecan-1,13-diamin (TTD) Polyaminoamide wie Versamid 140, 4-Methylcyclohexan-1,3-diamin, 2-Methylcyclohexan-1,3-diamin, Mischungen aus 4-Methylcyclohexan-1,3-diamin und 2-Methylcyclohexan-1,3-diamin (MCDA), 1,2-Diaminocyclohexan (DACH), 2,4-Diamino-3,5-diethyltoluol, 2,6-Diamino-3,5-diethyltoluol (DETDA), 1,5-Diaminopentan (Cadaverin), meta-Xylylendiamin (MXDA), Reaktionsprodukte von 1,3-Benzoldimethanamin mit Styrol (Gaskamine® 240), N-(2-Aminoethyl)piperazin (AEPIP) und Dimethylaminopropylaminopropylamin (DMAPAPA). Als zusätzliche primäre Monoamine eignen sich beispielsweise Dimethylaminopropylamin (DMAPA) und Diethylaminopropylamin (DEAPA).

In einer besonderen Ausführungsform macht das erfindungsgemäße Alkyl-substituierte Ethylenamin mindestens 50 Gew.-%, besonders bevorzugt mindestens 80 Gew.-%, ganz besonders bevorzugt mindestens 90 Gew.-% bezogen auf die Gesamtmenge der Härter in der Faser-Matrix-Zusammensetzung aus. In einer bevorzugten Ausführungsform enthält die Faser-Matrix-Zusammensetzung keine Anhydridhärter. In einer besonderen Ausführungsform enthält die Faser-Matrix-Zusammensetzung neben dem erfindungsgemäßen Alkyl-substituierten Ethylenamin keine weiteren Härter.

Unter einem Härter ist im Rahmen der vorliegenden Erfindung ein Aminohärter oder ein Anhydridhärter zu verstehen. Unter einem Aminohärter ist im Rahmen der vorliegenden Erfindung ein Amin mit einer NH-Funktionalität von $\geq 2$ zu verstehen (demnach weist bspw. ein primäres Monoamin eine NH-Funktionalität von 2, ein primäres Diamin eine NH-Funktionalität von 4 und ein Amin mit 3 sekundären Aminogruppen eine NH-Funktionalität von 3 auf). Unter einem Anhydridhärter ist im Rahmen der vorliegenden Erfindung ein intramolekulares Carbonsäureanhydrid wie beispielsweise 4-Methyltetrahydrophthalsäureanhydrid zu verstehen.

Vorzugsweise werden bei der Matrix-Komponente der erfindungsgemäßen Faser-Matrix-Zusammensetzung die Epoxid-Verbindungen (Epoxidharze inklusive etwaiger Epoxidgruppen aufweisender Reaktivverdünner) und Aminohärter in einem bezogen auf die Epoxidgruppen bzw. die NH-Funktionalität in etwa stöchiometrischem Verhältnis eingesetzt. Besonders geeignete Verhältnisse von Epoxidgruppen zu NH-Funktionalität sind beispielsweise 1 : 0,8 bis 1 : 1,2. Alternativ werden in einer besonderen Ausführungsform der Erfindung die Epoxid-Verbindungen (Epoxidharze inklusive etwaiger Epoxidgruppen aufweisender Reaktivverdünner) und Aminohärter bei der Matrix-Komponente der erfindungsgemäßen Faser-Matrix-Zusammensetzung in einem in etwa äquivalenten Verhältnis eingesetzt, vorzugsweise in einem Verhältnis im Bereich von 1 : 0,8 bis 1 : 1,2 bezogen auf den EEW der Epoxidverbindungen und den $AHEW_{emp}$ der Aminohärter.

Bevorzugt handelt es sich bei den erfindungsgemäßen Verstärkungsfasern um Glasfasern, Carbonfasern, Aramidfasern oder Basaltfasern oder um Mischungen davon. Besonders bevorzugt sind Glasfasern und Carbonfasern, insbesondere Glasfasern. Als Glasfasern werden üblicherweise Fasern aus E-Glas, aber auch solche aus R-Glas, S-Glas und T-Glas eingesetzt. Durch die Wahl des Glas-Typs können die mechanischen Eigenschaften der Verbundmaterialien beeinflusst werden. Erfindungsgemäß werden die Verstärkungsfasern als Einzelfasern, vorzugsweise aber als Faserfilamente (filaments), Faserstränge (rovings), Fasermatten (mats) oder als Kombinationen davon eingesetzt. Besonders bevorzugt werden die Verstärkungsfasern in Form von Fasersträngen (rovings) eingesetzt. Die Verstärkungsfasern können beispielsweise als kurze Faserstücke mit einer Länge von wenigen mm bis cm oder als mittellange Faserstücke mit einer Länge von wenigen cm bis wenigen m oder als lange Faserstücke mit einer Länge im Bereich von wenigen m oder mehr vorliegen. Erfindungsgemäß werden vorzugsweise, insbesondere für das Strangziehverfahren oder das Wickelverfahren, Verstärkungsfasern in Form von Endlosfaserfilamenten, Endlosfasersträngen oder Endlosfasermatten eingesetzt. Endlosfaserfilamente, Endlosfaserstränge oder Endlosfasermatten im Sinne der Erfindung haben eine Länge von mindestens 10 m, bevorzugt von mindestens 100 m, insbesondere von mindestens 200 m.

Die erfindungsgemäße Faser-Matrix-Zusammensetzung kann auch weitere Additive wie beispielsweise inerte Verdünner, Härtungsbeschleuniger, Pigmente, Farbstoffe, Füllstoffe, Trennmittel, Zähigkeit erhöhende Agenzien (toughener), Fließmittel, schaumhemmende Agenzien (anti-foamer), flammhemmende Agenzien oder Eindickungsmittel enthalten. Solche Additive werden üblicherweise in funktioneller Menge zugegeben, also bspw. ein Pigment in einer Menge, die zu der gewünschten Farbe für die Zusammensetzung führt. Üblicherweise enthalten die erfindungsgemäßen Zusammensetzungen von 0 bis 50 Gew.-%, bevorzugt 0 bis 20 Gew.-%, bspw. 2 bis 20 Gew.-% für die Gesamtheit aller Additive bezogen auf die gesamte Faser-Matrix-Zusammensetzung. Unter Additive werden im Rahmen dieser Erfindung alle Zusätze zur Faser-Matrix-Zusammensetzung verstanden, die weder Epoxidverbindung noch Härter (Aminohärter und/oder Anhydridhärter) noch Verstärkungsfaser sind.

Vorzugsweise handelt es sich bei der erfindungsgemäßen Faser-Matrix-Zusammensetzung um mit Matrix-Komponente imprägnierte Verstärkungsfasern.

Die vorliegende Erfindung betrifft auch die Verwendung des erfindungsgemäßen Alkyl-substituierten Ethylenamins als Härter für die Herstellung von Epoxidharz-basierten Verbundmaterialien.

DMDETA kann beispielsweise als Nebenprodukt bei der Herstellung von 1,2-Propandiamin (PDA) durch Aminierung von Monoisopropanolamin (MIPOA) mit Ammoniak entstehen. Alternativ kann es auch gezielt hergestellt werden durch katalytische Alkoholaminierung von MIPOA mit PDA in Gegenwart von Wasserstoff und gegebenenfalls auch Ammoniak. Weiter kann DMDETA auch gemäß Akhmadeyeva und Zagidullin (edited by Mukmeneva, Materialy Yubileinoi Nauchno-Metodicheskoi Konferentsii "III Kirpichnikovskie Chteniya", Kazan, Russian Federation, Mar. 25-28, 2003, S. 473-475) ausgehend von 1,2-Dichloropropan hergestellt werden. Andere erfindungsgemäße Alkyl-substituierte Ethylenamine können in entsprechender Weise hergestellt werden.

Ein weiterer Gegenstand der Erfindung ist ein Verfahren zur Herstellung von gehärteten Verbundmaterialien aus der erfindungsgemäßen Faser-Matrix-Zusammensetzung. Bei dem erfindungsgemäßen Verfahren zur Herstellung solcher gehärteten Verbundmaterialien wird die erfindungsgemäße Faser-Matrix-Zusammensetzung bereitgestellt und anschließend gehärtet. Dazu werden die Bestandteile der Matrix-Komponente miteinander in Kontakt gebracht und vermischt, mit den Verstärkungsfasern in Kontakt gebracht (Imprägnierung der Verstärkungsfasern mit der Martix-Komponente oder Vermischen (bzw. Einbetten) der Verstärkungsfasern in der Matrix-komponente) und danach bei einer für die Anwendung praktikablen Temperatur gehärtet. Vorzugsweise erfolgt die Bereitstellung der Faser-Matrix-Zusammensetzung durch Imprägnieren der Verstärkungsfasern mit der Matrix-Komponente. Bevorzugt erfolgt die Härtung bei einer Temperatur von mindestens 70 °C, besonders bevorzugt von mindestens 90 °C. Die Härtung kann bei Temperaturen kleiner 180 °C, insbesondere bei Temperaturen kleiner 150 °C, erfolgen, insbesondere in einem Temperaturbereich von 70 bis 180 °C, ganz besonders bevorzugt in einem Temperaturbereich von 90 bis 150 °C. Die Härtung kann vorzugsweise unter Normaldruck erfolgen.

Ein weiterer Gegenstand der Erfindung ist das gehärtete Verbundmaterial aus der erfindungsgemäßen Faser-Matrix-Zusammensetzung, insbesondere aus mit Matrix-Komponente imprägnierten Verstärkungsfasern. Insbesondere ist gehärtetes Verbundmaterial, das erhältlich ist bzw. erhalten wird durch Härtung einer erfindungsgemäßen Faser-Matrix-Zusammensetzung, insbesondere der mit Matrix-Komponente imprägnierten Verstärkungsfasern, ein Gegenstand der Erfindung. Insbesondere ist gehärtetes Verbundmaterial, das erhältlich ist bzw. erhalten wird durch das erfindungsgemäße Verfahren zur Herstellung von gehärtetem Verbundmaterial, ein Gegenstand der Erfindung. Die erfindungsgemäß gehärteten Verbundmaterialien, bzw. deren Matrix-Komponenten, weisen eine vergleichsweise hohe Glasübergangstemperatur Tg auf.

Gegenstand der Erfindung als besonders bevorzugtes erfindungsgemäßes Verfahren für die Herstellung von gehärteten Verbundmaterialien, beispielsweise von Bewehrungsstäben (rebars), ist auch ein Strangziehverfahren (Pultrusion), umfassend die folgenden Schritte:

a. Anordnen einer Mehrzahl von Verstärkungsfasern zu einem Bündel,

b. Ziehen des Bündels durch eine Imprägnierungsvorrichtung, wobei die Verstärkungsfasern des Bündels mit einer härtbaren Zusammensetzung imprägniert werden, und

c. Ziehen des Bündels aus imprägnierten Verstärkungsfasern durch eine Heizvorrichtung, in der das Bündel bei einer Temperatur im Bereich von 70 bis 180 °C zu einem gehärteten Verbundmaterial gehärtet wird,

dadurch gekennzeichnet, dass die härtbare Zusammensetzung die erfindungsgemäßen Matrix-Komponente ist. Vorzugsweise handelt es sich bei den Verstärkungsfasern um Glasfasern oder Carbonfasern, insbesondere um Glasfasern, vorzugsweise mit Längen von mindestens 1 m, insbesondere von mindestens 10 m. Vorzugsweise liegen die Verstärkungsfasern in Form von Endlosfaserfilamenten (filaments), Endlosfasersträngen (rovings) oder Endlosfasermatten (mats), oder in Kombinationen davon, vor. Um das Auftreten von Fasern unmittelbar an der Oberfläche des Bündels zu vermeiden, kann dem Bündel noch ein an Matrix-Komponente reicher Oberflächenschleier (surface veil) zugefügt werden. Vorzugsweise handelt es sich bei der Imprägnierungsvorrichtung von Schritt b um eine mit der härtbaren Zusammensetzung gefüllten Wanne, in der das Bündel aus Verstärkungsfasern getränkt wird, oder um eine mit der härtbaren Zusammensetzung versehenen Einspritzvorrichtung, mit der die härtbare Zusammensetzung unter Druck in das Bündel auf die Oberfläche der Verstärkungsfasern injiziert wird. Insbesondere handelt es sich bei der Imprägnierungsvorrichtung von Schritt b um eine mit der härtbaren Zusammensetzung versehenen Einspritzvorrichtung, mit der die härtbare Zusammensetzung unter Druck in das Bündel auf die Oberfläche der Verstärkungsfasern injiziert wird. Vorzugsweise erfolgt die Härtung des Bündels aus imprägnierten Verstärkungsfasern in der Heizvorrichtung von Schritt c bei einer Temperatur im Bereich von 90 bis 150 °C. In einer besonderen Ausführungsform des Verfahrens kann das Bündel aus Verstärkungsfasern zur besseren Imprägnierung in der Imprägnierungsvorrichtung aufgespreizt werden. In einer besonderen Ausführungsform kann dem Bündel aus imprägnierten Verstärkungsfasern während der Härtung in der Heizvorrichtung zu einem spezifischen Querschnitt (bspw. zu einem rechteckigen oder einem kreisrunden Querschnitt) geformt werden, so dass das gehärtete Verbundmaterial in Form von Profilen mit dem spezifischen Querschnitt entsteht. Vorzugsweise wird das Strangziehverfahren als kontinuierlicher Prozess durchgeführt. Imprägnierungsvorrichtung und Heizvorrichtung sind im kontinuierlichen Prozess so ausgelegt, dass bei einer konstanten Geschwindigkeit, mit der das Bündel aus Verstärkungsfasern durch die Vorrichtungen gezogen wird, eine ausreichende Imprägnierung der Verstärkungsfasern und eine ausreichende Härtung gewährleistet ist. Für eine gleichmäßige und praktikable Imprägnierung ist eine ausreichend lange Topfzeit der Matrix-Komponente erforderlich. Gleichzeitig ist eine schnelle Härtung der Matrix-Komponente bei der Härtungstemperatur der Heizvorrichtung wichtig, um eine vergleichsweise kurze Heizstrecke der Heizvorrichtung bzw. vergleichsweise hohe Strangziehgeschwindigkeit zu realisieren. Eine hohe Strangziehgeschwindigkeit ist maßgeblich für die Produktivität des Verfahrens. Die mittels Strangziehverfahren hergestellten Profile können bspw. als Bewehrungsstäbe (rebars) beim Bau von Betonbauten verwendet werden.

Gegenstand der Erfindung als besonders bevorzugtes erfindungsgemäßes Verfahren für die Herstellung von gehärteten Verbundmaterialien, beispielsweise von Bewehrungsstäben (rebars), ist auch ein Wickelverfahren (Filament Winding), umfassend die folgenden Schritte:

a. Imprägnieren einer oder mehrerer Verstärkungsfasern mit einer härtbaren Zusammensetzung und anschließendes Wickeln der so erhaltenen ein oder mehreren imprägnierten Verstärkungsfasern auf einen Wickelkern zu einem ungehärteten Verbundmaterial, und

b. Härten des ungehärteten Verbundmaterials bei einer Temperatur im Bereich von 70 bis 180 °C zu einem gehärteten Verbundmaterial

dadurch gekennzeichnet, dass die härtbare Zusammensetzung die erfindungsgemäßen Matrix-Komponente ist. Vorzugsweise handelt es sich bei den Verstärkungsfasern um Glasfasern oder Carbonfasern, insbesondere um Glasfasern, vorzugsweise mit Längen von mindestens 1 m, insbesondere von mindestens 10 m. Vorzugsweise liegen die Verstärkungsfasern in Form von Endlosfaserfilamenten (filaments), Endlosfasersträngen (rovings) oder Endlosfasermatten (mats), oder in Kombinationen davon, vor. Vorzugsweise handelt es sich bei der Imprägnierungsvorrichtung von Schritt a um eine mit der härtbaren Zusammensetzung gefüllte Wanne, in der die ein oder mehreren Verstärkungsfasern getränkt werden. Vorzugsweise erfolgt die Härtung des ungehärteten Verbundmaterials in Schritt b bei einer Temperatur im Bereich von 90 bis 150 °C. Der Wickelkern kann bspw. konische Form aufweisen und nach der Härtung aus dem gehärteten Verbundmaterial entfernt werden, oder bspw. aus einem Material bestehen, das nach der Härtung des Verbundmaterials aufgelöst werden kann, oder er kann in dem gehärteten Verbundmaterial verbleiben. Das Wickelverfahren wird vorzugsweise für die Herstellung von rotationssymmetrischen Bauteilen eingesetzt, es können aber auch Kerne mit komplexeren Formen umwickelt und entsprechend komplexer geformte Bauteile hergestellt werden. In einer besonderen Ausführungsform wird das Wickelverfahren als kontinuierlicher Prozess durchgeführt. Für eine gleichmäßige und praktikable Imprägnierung ist eine ausreichend lange Topfzeit der Matrix-Komponente erforderlich. Gleichzeitig ist eine schnelle Härtung der Matrix-Komponente bei der Härtungstemperatur der Heizvorrichtung wichtig, um eine vergleichsweise kurze Härtung bzw. vergleichsweise hohe Produktivität des Verfahrens zu gewährleisten. Die mittels Wickelverfahren hergestellten Bauteile können bspw. als Bewehrungsstäbe (rebars) beim Bau von Betonbauten verwendet werden.

Mittels der erfindungsgemäßen Verfahren, insbesondere mittels des erfindungsgemäßen Strangziehverfahrens und mittels des erfindungsgemäßen Wickelverfahrens, lassen sich Bewehrungsstäbe (rebars) herstellen. Solche Bewehrungsstäbe aus dem erfindungsgemäßen Verbundmaterial sind besonders witterungsbeständig, während konventionelle Bewehrungsstäbe aus Stahl der Korrosion ausgesetzt sind. Der Einsatz solcher Bewehrungsstäbe in Betonbauten ermöglicht daher den Bau besonders langlebiger Bauwerke.

Gegenstand der Erfindung sind somit auch Bewehrungsstäbe (rebars) aus dem erfindungsgemäßen gehärteten Verbundmaterial. Insbesondere sind Bewehrungsstäbe, die erhältlich sind bzw. erhalten werden durch Härtung von mit Matrix-Komponente imprägnierten Verstärkungsfasern, ein Gegenstand der Erfindung. Gegenstand der Erfindung sind insbesondere Bewehrungsstäbe, die erhältlich sind bzw. erhalten werden durch ein erfindungsgemäßes Verfahren zur Herstellung von gehärtetem Verbundmaterial, vorzugsweise durch das erfindungsgemäße Strangziehverfahren (Pultrusion) oder durch das erfindungsgemäße Wickelverfahren (Filament Winding). Solche Bewehrungsstäbe können in beliebiger Länge und Dicke hergestellt werden, bevorzugt weisen die Bewehrungsstäbe Längen im Bereich von 0,5 bis 50 m, insbesondere von 1 bis 20 m und Dicken von 0,5 bis 5 cm, insbesondere von 1 bis 3 cm auf. Der Querschnitt solcher Bewehrungsstäbe kann beliebige Geometrien aufweisen, vorzugsweise ist er im Wesentlichen rechteckig oder kreisförmig. Dabei weisen solche Bewehrungsstäbe vorzugsweise ein Oberflächenprofil auf, beispielsweise eine oder mehrere den Stab spiralförmig umlaufende Einfurchungen oder Erhebungen, um den Halt in dem Beton zu verbessern. Solche Oberflächenprofile können beispielsweise nachträglich in den bereits gehärteten Bewehrungsstab gefräst werden, oder durch Umwickeln mit entsprechendem imprägnierten Verstärkungsfasermaterial vor der Härtung aufgetragen werden. Solche Bewehrungsstäbe können auch eine zusätzliche Oberflächenbeschichtung, bspw. aus einem Epoxidreinharzmaterial, aufweisen, um die Verstärkungsfasern zusätzlich vor Witterung, sowie chemischen und thermischen Einflüssen zu schützen, oder um die Interaktion mit dem Beton zu verbessern.

Als weitere Herstellverfahren für gehärtete Verbundmaterialien, für die die erfindungsgemäße Matrix-Komponente geeignet ist, seien neben dem Strangziehverfahren (Pultrusion) und dem Wickelverfahren (Filament Winding) noch die Härtung von vorimprägnierten Fasern oder Fasergeweben (z.B. Prepregs) nach Lagerung, sowie die Herstellung von Composite-Formkörpern mittels Infusions- bzw. Injektionsverfahren wie Vakuuminfusion (VARTM), Spritzpressen (resin transfer molding, RTM), und auch Nasspressverfahren wie BMC (bulk mold compression) und SMC (sheet mold compression) genannt.

Ein weiterer Gegenstand der Erfindung betrifft das gehärtete Verbundmaterial, dadurch gekennzeichnet, dass es erhältlich oder erhalten ist durch Härtung der erfindungsgemäßen Faser-Matrix-Zusammensetzung, bzw. dass es erhältlich oder erhalten ist durch die erfindungsgemäßen Verfahren zur Herstellung von gehärteten Verbundmaterialien. Gegenstand der Erfindung sind auch Formkörper (Composite-Formkörper), die dadurch gekennzeichnet sind, dass sie aus dem erfindungsgemäßen gehärteten Verbundmaterial bestehen.

Die Topfzeit kann nach der Norm DIN 16 945 (1989) bestimmt werden ("isothermer Viskositätsverlauf"). Sie

gibt einen Anhaltspunkt über die Zeitspanne ab dem Vermischen der Komponenten, in der die Reaktionsharzmasse handhabbar ist. Dazu wird bei einer festgelegten Temperatur (bspw. Raumtemperatur (23 C°)) mittels Rheometer (z.B. schubspannungsgesteuertes Platte-Platte Rheometer (z.B. MCR 301, Anton Paar) mit einem Plattendurchmesser von bspw. 15 mm und einem Spaltabstand von bspw. 0,25 mm) der Verlauf der Viskosität mit der Zeit bis zum Erreichen einer festgelegten Viskositätsgrenze (bspw. 6.000 mPa*s) bestimmt. Die Topfzeit ist dann die Zeit bis zum Erreichen dieser Viskositätsgrenze.

Die Gelierzeit gibt nach der Norm DIN 16 945 (1989) einen Anhaltspunkt über die Zeitspanne zwischen der Zugabe des Härters zum Reaktionsgemisch und des Übergangs der Reaktionsharzmasse vom flüssigen in den Gelzustand. Die Temperatur spielt dabei eine wichtige Rolle, weshalb die Gelierzeit jeweils für eine vorbestimmte Temperatur ermittelt wird. Mit Hilfe dynamisch-mechanischer Methoden, insbesondere der Rotationsviskosimetrie, können auch kleine Probenmengen quasi-isotherm untersucht und ihr gesamter Viskositäts- bzw. Steifigkeitsverlauf erfasst werden. Nach der Norm ASTM D 4473-08 (2016) ist der Schnittpunkt zwischen dem Speichermodul G' und dem Verlustmodul G", an dem die Dämpfung tan-$\delta$ den Wert 1 hat, der Gelpunkt, und die Zeitspanne ab Zugabe des Härters zum Reaktionsgemisch bis zum Erreichen des Gelpunkts ist die Gelierzeit. Die so bestimmte Gelierzeit kann als Maß für die Härtungsgeschwindigkeit angesehen werden.

Zur Bestimmung der B-Zeit, die ebenfalls als Maß für die Härtungsgeschwindigkeit dient, wird gemäß der Norm DIN EN ISO 8987 (2005) eine Probe (bspw. 0,5 g) der frisch hergestellten Reaktionsharzmasse auf einer (bspw. 145 °C) heißen Platte (bspw. ohne Vertiefung) aufgebracht und die Zeit bis zur Ausbildung von Fäden (Gelpunkt) bzw. bis zum plötzlichen Erhärten (Aushärtung) bestimmt.

Die Glasübergangstemperatur (Tg) kann mittels Differential Kalorimeter (DSC), beispielsweise gemäß der Norm ASTM D 3418-15 (2015), bestimmt werden. Dabei wird eine sehr kleine Probenmenge (z.B. ca. 10 mg) in einem Aluminiumtiegel erwärmt (bspw. bei 20 °C/min) und der Wärmestrom zu einem Referenztiegel gemessen. Dieser Zyklus wird dreimal wiederholt. Die Bestimmung des Glasübergangs erfolgt aus der zweiten Messung oder als Mittelwert aus der zweiten und dritten Messung. Die Auswertung der Tg-Stufe der Wärmestromkurve kann über den Wendepunkt, nach der halben Breite oder dem Verfahren der Mittelpunktstemperatur bestimmt werden.

Das Aminwasserstoff-Äquivalentgewicht (amine hydrogen equivalent weight, AHEW) kann sowohl theoretisch wie auch empirisch bestimmt werden, wie von B. Burton et al (Huntsman, "Epoxy Formulations using Jeffamine Polyetheramines", Apr. 27, 2005, p. 8-11) beschrieben. Das theoretisch berechnete AHEW ist definiert als Quotient aus dem Molekulargewicht des Amins durch die Anzahl der verfügbaren Aminwasserstoffe (bspw. 2 für jede primäre Aminogruppe plus 1 für jede sekundäre Aminogruppe). Für IPDA beispielsweise, das ein Molekulargewicht von 170,3 g/mol und 2 primäre Aminogruppen, also 4 verfügbare Aminwasserstoffe, aufweist, ist das theoretisch berechnete AHEW 170,3 /4 g/eq = 42,6 g/eq. Die Bestimmung des empirischen AHEW basiert auf der Annahme, dass äquivalente Mengen von Epoxidharz und Aminohärter ein gehärtetes Epoxidharz ergeben, das durch eine maximale Wärmeformbeständigkeit (heat distortion temperature, HDT) bzw. eine maximale Gasübergangstemperatur (Tg) charakterisiert ist. Daher werden, um das empirische AHEW zu ermitteln, Mischungen aus einer festgelegten Menge Epoxidharz und einer dazu variierenden Menge des Aminohärters so vollständig wie möglich gehärtet, deren jeweilige HDT bzw. Tg bestimmt und die so ermittelten Charakteristika gegen das Verhältnis der Ausgangsstoffe aufgetragen. Das empirische AHEW ($AHEW_{emp}$) ist definiert durch die folgende Formel:

$$AHEW_{emp} = (AH_{max} * EEW_{epox}) / ER$$

mit

$AH_{max}$ = Menge des Aminohärters bei maximaler HDT oder Tg in Gramm
$EEW_{epox}$ = EEW Wert des für den Test eingesetzten Epoxidharzes
ER = Menge des für den Test eingesetzten Epoxidharzes in Gramm

Im Rahmen dieser Erfindung ist mit $AHEW_{emp}$ ein empirisches Aminwasserstoff-Äquivalentgewicht gemeint, das auf der Bestimmung einer maximalen Tg (gemessen mittels DSC entsprechend der Norm ASTM D 3418-15 (2015)) basiert. Das empirische $AHEW_{emp}$ ist von besonderer Bedeutung in Fällen, in denen das theoretisch berechnete AHEW nicht zugänglich ist, bspw. bei Mischungen von polymeren Aminen.

Die Anfangsviskosität ("Mischviskosität") einer härtbaren Zusammensetzung, bspw. der Matrix-Komponente der erfindungsgemäßen Faser-Matrix-Zusammensetzung, kann gemäß der Norm DIN ISO 3219 (1993) unmittelbar nach dem Mischen der Bestandteile bestimmt werden. Die Mischungsviskosität wird mit Hilfe eines Schubspannung-gesteuerten Rheometers (z.B. MCR 301 der Firma Anton Paar) mit Kegel-Platte-Anordnung (z.B. Durchmesser von Kegel und Platte: 50 mm; Kegelwinkel: 1°; Spaltbreite: 0,1 mm). Die Messtemperatur hat einen großen Einfluss auf die Viskosität und die Härtungsgeschwindigkeit der härtbaren Zusammensetzung und ist daher ein entscheidender Faktor bei diesen

Messungen. Entsprechend muss die Bestimmung der Mischviskosität bei einer bestimmten Temperatur erfolgen, bspw. bei Raumtemperatur (23 °C) um vergleichbar zu sein.

Die Schlagzähigkeit eines Probekörpers aus gehärtetem Epoxidharz kann mittels Kerbschlagbiegeversuch nach Charpy gemäß der Norm DIN EN ISO 179-1 (2010) bei Raumtemperatur bestimmt werden. Eine hohe Schlagzähigkeit entspricht einer geringen Sprödigkeit.

Beispiele

Beispiel 1a: Herstellung von DMDETA aus Aminopropanol (MIPOA) und Propandiamin (PDA)

Ein Rohrreaktor wurde mit 600 ml Cu-Katalysator gefüllt. Zur Aktivierung des Katalysators wurde dieser unter einem Stickstoffstrom bei Normaldruck auf eine Temperatur im Bereich von 180 bis 200 °C erhitzt. Wassersoff wurde dem Stickstoffstrom bei vorsichtiger Kontrolle der Exothermie der Aktivierung hinzudosiert. Schließlich wurde reiner Wasserstoff bei Normaldruck und einer Temperatur von 200 °C für eine Dauer von 6 h über den Katalysator geleitet. Nach der Aktivierung des Katalysators wurde der Reaktor unter 200 bar Wasserstoff gesetzt und bei einer Temperatur im Bereich von 180 bis 200 °C wurde ein Strom aus 100 g/h 1-Aminopropan-2-ol (in Mischung mit etwa 10 % 2-Aminopropan-2-ol), 200 g/h Propan-1,2-diamin, 80 g/h $NH_3$ und 100 NL/h $H_2$ durch den Reaktor geleitet. Der Produktstrom wurde auf Normaldruck entspannt und gesammelt. Das so erhaltene Rohprodukt, das etwa 20 bis 30 Gew.-% DMDETA enthielt, wurde unter reduziertem Druck destillativ gereinigt um die DMDETA-Fraktion zu erhalten. Diese DMDETA-Fraktion hatte eine Reinheit von >99% (für die Summe aller DMDETA-Isomere) und ein Isomerenverhältnis (in GC-Flächen-%) von etwa 6 : 87 : 6 für die Isomere der Formeln IIa : IIb : IIc.

Beispiel 1b: Herstellung von DMDETA aus Aminopropanol (MIPOA)

Ein Rohrreaktor wurde mit 800 ml Co/Ni/Cu-Katalysator gefüllt. Zur Aktivierung des Katalysators wurde dieser unter einem Wasserstoffstrom bei Normaldruck auf eine Temperatur von 280 °C erhitzt. Nach der Aktivierung des Katalysators wurde der Reaktor unter 200 bar Wasserstoff gesetzt und bei einer Temperatur im Bereich von 170 bis 190 °C wurde ein Strom aus 320 g/h 1-Aminopropan-2-ol (in Mischung mit etwa 10% 2-Aminopropan-2-ol), 200 bis 730 g/h $NH_3$ und 100 NL/h $H_2$ durch den Reaktor geleitet. Der Produktstrom wurde auf Normaldruck entspannt und gesammelt. Das so erhaltene Rohprodukt, das neben dem Hauptprodukt Propandiamin (PDA) etwa 5 Gew.-% DMDETA enthielt, wurde unter reduziertem Druck destillativ gereinigt, um die DMDETA-Fraktion zu erhalten. Diese DMDETA-Fraktion hatte eine Reinheit von >99% (für die Summe aller DMDETA-Isomere) und ein Isomerenverhältnis (in GC-Flächen-%) von etwa 42 : 53 : 4 für die Isomere der Formeln IIa : IIb : IIc.

Beispiel 2: Härtung von Epoxidharz mit DMDETA

DMDETA-Mischungen aus Beispiel 1a bzw. Beispiel 1b und Epoxidharz (Bisphenol-A-Diglycidylether, Epilox A19-03, Leuna, EEW: 185 g/mol) wurden gemäß den Mengenangaben der Tabelle 1 in einem Rührwerk gemischt (1 min bei 2000 rpm). Unmittelbar im Anschluss auf die Vermischung wurden DSC-Messungen (differential scanning calorimetry) und rheologische Untersuchungen durchgeführt. Zum Vergleich wurden auch entsprechende Zusammensetzungen mit IPDA (Baxxodur® EC 201, BASF), Diethylentriamin (DETA, BASF), 4-Methyltetrahydrophthalsäureanhydrid (MTHPA, Sigma-Aldrich) in Kombination mit dem Beschleuniger 2,4,6-Tris(dimethylaminomethyl)phenol (K54, Sigma-Aldrich) bzw. MTHPA in Kombination mit dem Beschleuniger 1-Methylimidazol (1-MI, BASF) in gleicher Weise untersucht.

Die DSC-Untersuchungen der Härtungsreaktion von DMDETA bzw. IPDA, DETA, MTHPA/K54 bzw. MTHPA/1-MI zur Bestimmung von Onset-Temperatur (To), exothermer Enthalpie ($\Delta H$) und Glasübergangstemperatur (Tg) wurden nach ASTM D 3418-15 (2015) durchgeführt, wobei das folgende Temperaturprofil verwendet wurde: 0 °C $\rightarrow$ 20 K/min 200 °C $\rightarrow$ 10 min 200 °C. Die Tg wurde beim zweiten Lauf bestimmt. Die Ergebnisse sind in Tabelle 1 zusammengestellt.

Die rheologischen Messungen zur Untersuchung des Reaktivitätsprofils (Topfzeit und Gelierzeit) der verschiedenen Aminohärter (IPDA, DETA und DMDETA) bzw. der verschiedenen Anydridhärter-Systeme (MTHPA/K54 und MTHPA/1-MI) mit dem Epoxidharz wurden an einem schubspannungsgesteuerten Platte-Platte Rheometer (MCR 301, Anton Paar) mit einem Plattendurchmesser von 15 mm und einem Spaltabstand von 0,25 mm bei unterschiedlichen Temperaturen durchgeführt. Für die Topfzeiten - als Maß für die Zeitspanne, in der die Reaktionsharzmasse handhabbar ist - wurde rotierend an dem oben genannten Rheometer bei Raumtemperatur (23 °C) die Zeit gemessen, die die frisch hergestellten Reaktionsharzmasse benötigte um eine Viskosität von 6.000 mPa*s zu erreichen. Die Gelierzeiten wurden oszillierend an dem oben genannten Rheometer bei 90 °C bzw. 110 °C bestimmt, wobei gemäß Norm ASTM D 4473-08 (2016) der Schnittpunkt von Verlustmodul (G") und Speichermodul (G') die Gelierzeit lieferte. Die Bestimmung der Mischviskositäten ($\eta_o$) erfolgte gemäß der Norm DIN ISO 3219 (1993) unmittelbar nach dem Vermischen der Komponenten mit Hilfe eines Schubspannung-gesteuerten Rheometers (z.B. MCR 301 der Firma Anton Paar) mit Kegel-Platte-Anordnung (z.B. Durchmesser von Kegel und Platte: 50 mm; Kegelwinkel: 1°; Spaltbreite: 0,1 mm) bei Raumtemperatur (23 °C). Für die Bestimmung der B-Zeiten, die ebenfalls als Maß für die Härtungsgeschwindigkeit dienen, wurden Proben (etwa 0,5 g) der frisch hergestellten Reaktionsharzmasse auf einer 145 °C heißen Platte ohne Vertiefung aufgebracht und gemäß der Norm DIN EN ISO 8987 (2005) die Zeit bis zur Ausbildung von Fäden (Gelpunkt) bzw. bis zum plötzlichen Erhärten (Aushärtung) bestimmt. Die Ergebnisse der rheologischen Messungen sind in Tabelle 1 zusammengefasst.

Unmittelbar im Anschluss an die Mischung von Epoxidharz und Aminohärter bzw. Anhydridhärter-System wurden diese bei 1 mbar entgast und danach gehärtet (8 h bei 60 °C, anschließend 4 h bei 100 °C, anschließend 2 h bei 160 °C). Nach der Härtung wurden die mechanischen Eigenschaften des gehärteten Harzes (Zug-Elastizitätsmodul (E-t), Zugfestigkeit (σ-M), Zugdehnung (ε-M), Biege-Elastizitätsmodul (E-f), Biegefestigkeit (σ-fM) und Biegedehnung (ε-fM)) gemäß der Normen ISO 527-2:1993 und ISO 178:2006 bei Raumtemperatur bestimmt. Die Ergebnisse sind ebenfalls in Tabelle 1 zusammengestellt. Die Schlagzähigkeit wurde mittels Kerbschlagbiegeversuch nach Charpy gemäß der Norm DIN EN ISO 179-1 (2010) bei Raumtemperatur bestimmt. Eine hohe Schlagzähigkeit entspricht einer geringen Sprödigkeit.

Tabelle 1: Vergleich der Härtung von Epoxidharz mit verschiedenen Aminohärtern (erfindungsgemäß: DMDETA; Vergleichsversuche: IPDA und DETA) bzw. mi den verschiedenen Anhydridhärter-Systemen (Vergleichsversuche: MTHPA mit K54 und MTHPA mit 1-MI)

| | IPDA | DETA | DMDETA | | MTHPA | |
|---|---|---|---|---|---|---|
| | | | Bsp. 1a | Bsp. 1b | K54 | 1-MI |
| $AHEW_{emp}$ | 43 | 20,6 | 27 | 27 | -- | -- |
| Menge Härter (g) per 100g Epoxidharz | 23,2 | 11,1 | 14,6 | 14,7 | 81 | 81 |
| Menge Beschleuniger (g) per 100g Epoxidharz | -- | -- | -- | -- | 2 | 2 |
| $\eta_o$ (mPas) bei 23°C | 1930 | 1540 | 1435 | 1350 | 2580 | 1400 |
| Topfzeit (min) bei 23°C | 47 | 31 | 54 | 60 | 854 | 600 |
| Gelierzeit (min) bei 90°C | 18,0 | 6,0 | 11,0 | 11,5 | 24,0 | 30,0 |
| Gelierzeit (min) bei 110°C | 7,5 | 2,6 | 4,6 | 5,0 | 7,0 | 9,4 |
| B-Zeit Platte (sec) bei 145°C (Gelpunkt) | 130 | 25 | 80 | 80 | 110 | 110 |
| B-Zeit Platte (sec) bei 145°C (Aushärtung) | 145 | 30 | 90 | 90 | 125 | 125 |
| To (°C) | 68 | 62 | 66 | 68 | 105 | 103 |
| ΔH (J/g) | 467 | 540 | 487 | 488 | 326 | 370 |
| Tg (°C) | 164,9 | 136,7 | 161,5 | 161,3 | 126,8 | 137,0 |
| Biege E-f (MPa) | 2884 | 2865 | 3057 | 3024 | 3251 | 3089 |
| Biege σ-fM (MPa) | 119,4 | 104 | 116,3 | 116,4 | 141,5 | 134 |
| Biege ε-fM (%) | 6,08 | 5,9 | 6,09 | 6,10 | 6,1 | 6,1 |
| Zug E-t (MPa) | 2734 | 2726 | n.d. | 2899 | 3112 | 2951 |
| Zug σ-M (MPa) | 80,1 | 70,6 | n.d. | 83,2 | 80,4 | 84 |
| Zug ε-M (%) | 7,8 | 6,2 | n.d. | 7,5 | 5,3 | 5,8 |
| Charpy ($kJ/m^2$) | 38,9 | 22,6 | 26 | 23,8 | 19,2 | 18,7 |
| ▪ (n.d.: nicht bestimmt) | | | | | | |

Beispiel 3: Pultrudate mit einer Matrix aus Epoxidharz und DMDETA

Mittels Strangziehverfahren (Pultrusion) wurden Pultrusionsprofile hergestellt. Dazu wurden Endlosfasern aus Glas (E-CR-Glas; PulStrand® 4100 Type 30; Fa. Owens Corning) in einer Strangziehvorrichtung (Px 750-08T; Fa. Pultrex) mit einer Matrixmischung aus 100 Teilen Epoxidharz (ER 5700, Fa. Leuna Harze, EEW: 180,5), 15 Teile DMDETA (aus Beispiel 1a) und 3 Teilen Trennmittel (PAT C656/3-7, Fa. Würtz) imprägniert, gebündelt und bei einer Strangziehgeschwindigkeit von 1,1 m/min und einer Temperatur von 160°C (Länge der Heizstrecke: 1 m) gehärtet. Neben diesen Glasfaser-basierten Pultrusionsprofilen (GF-Pultrudate) wurden in entsprechender Weise mit Endlosfasern aus Carbon (Sigrafil C T50-4.0/240-E100, SGL) Carbonfaser-basierte Pultrusionsprofile (CF-Pultrudate) hergestellt, wobei allerdings 5 Teile des Trennmittels eingesetzt wurden und eine Strangziehgeschwindigkeit von 0,4 m/min eingestellt wurde.

Die Glasübergangstemperatur (Tg) wurden nach ASTM D 3418-15 (2015) gemessen, wie für Beispiel 2 beschrieben. Dazu wurde etwas Material von den Pultrudaten entnommen und zu Pulver gemahlen, der Faseranteil davon mittels Dichtegradient entfernt und die Tg-Bestimmung mit dem verbleibenden pulverförmigen Harz-Material durchgeführt. Die GF-Pultrudate erreichten eine Glasübergangstemperatur von 88,7°C, und nach einer Nachhärtung (6 h bei 110°C) von 92,1°C. Die CF-Pultrudate erzielten eine Glasübergangstemperatur von 89,1°C.

Die Pultrudate wiesen einen Faservolumengehalt von etwa 60% auf.

In einem Drei-Punkt-Biegeversuch (Prüfgerät: Z050 Allround (Finne: r= 5 mm, Auflager: r= 5 mm), Fa. Zwick/Roell) gemäß der Norm DIN EN ISO 14125 (2011) wurden Biege-Elastizitätsmodul (E-f), Biegefestigkeit ($\sigma$-fM) und Biegedehnung ($\varepsilon$-fM) jeweils in längs (0°) und quer (90°) zur Ausrichtung der Fasern bestimmt. Untersucht wurden jeweils 6 Probekörper mit Abmessungen von 3 mm x 15 mm x 200 mm (Messungen in Längsorientierung) bzw. 5 Probekörper mit Abmessungen von 3 mm x 15 mm x 150 mm (Messungen in Querorientierung), bei einer Temperatur von 23°C, einer relativen Luftfeuchte von 50%, einem Kraftsensor von 50 kN, einer Geschwindigkeit von 1%/min und einer Stützweite von 120 mm (Messungen in Längsorientierung) bzw. 60 mm (Messungen in Querorientierung). Die Messwerte wurden wie gemäß der Norm für große Durchbiegungen erforderlich korrigiert. Die Ergebnisse sind in Tabelle 2 zusammengefasst.

Tabelle 2: Biegemechanik für GF- und CF-Pultrudate mit Epoxidharz/DMDETA-Matrix

| | Orientierung | E-f (GPa) | $\sigma$-fM (MPa) | $\varepsilon$-fM (%) |
|---|---|---|---|---|
| CF-Pultrudat | 0° | 140 ± 4 | 1300 ± 200 | 1,0 ± 0,1 |
| | 90° | 7,7 ± 0,4 | 60 ± 30 | 0,8 ± 0,3 |
| GF-Pultrudat | 0° | 52 ± 1 | 1350 ± 60 | 2,6 ± 0,1 |
| | 90° | 14,8 ± 0,6 | 28 ± 2 | 0,20 ± 0,02 |

Die interlaminare Scherfestigkeit ("*interlaminarshearstrength";* ILSS) der GF- und CF-Pultrudate wurde mittels Dreipunktverfahren gemäß der Norm DIN EN ISO 14130 (1998) bestimmt (Prüfgerät: Z050 Allround; Fa. Zwick/Roell; allerdings mit einem Auflager-Radius 3 mm), jeweils längs (0°) zur Ausrichtung der Fasern. Untersucht wurden jeweils 6 Probekörper mit einer Dicke von 3 mm bei einer Temperatur von 23°C, einer relativen Luftfeuchte von 50% und einem Kraftsensor von 50 kN. Die Ergebnisse sind in Tabelle 3 zusammengefasst.

Tabelle 3: interlaminare Scherfestigkeit (ILSS) für GF- und CF-Pultrudate mit Epoxidharz/DMDETA-Matrix

| | ILSS (MPa) |
|---|---|
| CF-Pultrudat | 72 ± 1 |
| GF-Pultrudat | 39 ± 3 |

**Patentansprüche**

1. Faser-Matrix-Zusammensetzung, mit einer Faserkomponente, bestehend aus Verstärkungsfasern, und einer Matrix-Komponente, die Epoxidharz und Härter umfasst, **dadurch gekennzeichnet, dass** der Härter mindestens ein Alkyl-substituiertes Ethylenamine der Formel I,

$$H_2N\text{-}A\text{-}(NH\text{-}A\text{-})_nNH_2 \qquad (I),$$

umfasst, wobei A unabhängig voneinander eine Ethylengruppe der Formel $-CHR-CH_2-$ oder $CH_2-CHR-$, mit R = H, Ethyl oder Methyl, mindestens jedoch ein A des Alkyl-substituierten Ethylenamins der Formel I eine Alkylethylengruppe der Formel $-CHR-CH_2-$ oder $-CH_2-CHR-$, mit R = Ethyl oder Methyl, ist, und
wobei n = 1 bis 4 ist.

**2.** Die Faser-Matrix-Zusammensetzung gemäß Anspruch 1,

wobei A unabhängig voneinander eine Methylethylengruppe der Formel $-CH(CH_3)-CH_2-$ oder $CH_2-CH(CH_3)-$ ist, und
wobei n = 1 bis 4 ist.

**3.** Die Faser-Matrix-Zusammensetzung gemäß Anspruch 1, wobei das Alkyl-substituierte Ethylenamin ein Dimethyldiethylentriamin der Formel II,

$$H_2N\text{-}A\text{-}NH\text{-}A\text{-}NH_2 \qquad (II),$$

ist, wobei A unabhängig voneinander eine Methylethylengruppe der Formel $-CH(CH_3)-CH_2-$ oder $-CH_2-CH(CH_3)-$ ist.

**4.** Die Faser-Matrix-Zusammensetzung gemäß einem der Ansprüche 1 bis 3, wobei das Alkyl-substituierte Ethylenamin mindestens 50 Gew.-% ausmacht, bezogen auf die Gesamtmenge der Härter in der Faser-Matrix-Zusammensetzung.

**5.** Die Faser-Matrix-Zusammensetzung gemäß einem der Ansprüche 1 bis 4, wobei das Epoxidharz ausgewählt ist aus der Gruppe bestehend aus Diglycidylether von Bisphenol A, Diglycidylether von Bisphenol F, Diglycidylether von hydriertem Bisphenol A und Diglycidylether von hydriertem Bisphenol F, oder Mischungen davon.

**6.** Die Faser-Matrix-Zusammensetzung gemäß einem der Ansprüche 1 bis 5, wobei es sich bei den Verstärkungsfasern um Glasfasern oder Carbonfasern oder Mischungen davon handelt.

**7.** Die Faser-Matrix-Zusammensetzung gemäß einem der Ansprüche 1 bis 6, wobei die Verstärkungsfasern mit der Matrix-Komponente imprägniert sind.

**8.** Verfahren zur Herstellung von gehärteten Verbundmaterialien, **dadurch gekennzeichnet, dass** die Faser-Matrix-Zusammensetzung gemäß einem der Ansprüche 1 bis 7 bereitgestellt und anschließend gehärtet wird.

**9.** Das Verfahren gemäß Anspruch 8, wobei die Härtung bei einer Temperatur im Bereich von 70 bis 180 °C erfolgt.

**10.** Das Verfahren gemäß Anspruch 8 oder 9, wobei die Bereitstellung der Faser-Matrix-Zusammensetzung durch Imprägnieren der Verstärkungsfasern mit der Matrix-Komponente erfolgt.

**11.** Das Verfahren nach Anspruch 8, umfassend die folgenden Schritte:

a. Anordnen einer Mehrzahl von Verstärkungsfasern zu einem Bündel,
b. Ziehen des Bündels durch eine Imprägnierungsvorrichtung, wobei die Verstärkungsfasern des Bündels mit der Matrix-Komponente imprägniert werden, und
c. Ziehen des Bündels aus imprägnierten Verstärkungsfasern durch eine zweite Heizvorrichtung, in der das Bündel bei einer Temperatur im Bereich von 70 bis 180 °C zu einem gehärteten Verbundmaterial gehärtet wird.

**12.** Das Verfahren nach Anspruch 8, umfassend die folgenden Schritte:

a. Imprägnieren einer oder mehrerer Verstärkungsfasern mit der Matrix-Komponente und anschließendes Wickeln der so erhaltenen ein oder mehreren imprägnierten Verstärkungsfasern auf einen Wickelkern zu einem ungehärteten Verbundmaterial, und
b. Härten des ungehärteten Verbundmaterials bei einer Temperatur im Bereich von 70 bis 180 °C zu einem gehärteten Verbundmaterial.

**13.** Das Verfahren nach einem der Ansprüche 8 bis 12, wobei die Verstärkungsfasern in Form von Endlosfaserfilamenten, Endlosfasersträngen oder Endlosfasermatten eingesetzt werden.

**14.** Gehärtete Verbundmaterial, **dadurch gekennzeichnet, dass** es erhältlich ist durch das Verfahren gemäß einem der Ansprüche 8 bis 13.

**15.** Formkörper, **dadurch gekennzeichnet, dass** er aus dem gehärteten Verbundmaterial gemäß Anspruch 14 besteht.

**16.** Bewehrungsstab, **dadurch gekennzeichnet, dass** er aus dem gehärteten Verbundmaterial gemäß Anspruch 14 besteht.

**17.** Verwendung von Alkyl-substituiertem Ethylenamin der Formel I,

$$H_2N\text{-}A\text{-}(NH\text{-}A\text{-})_nNH_2 \qquad (I),$$

mit A unabhängig voneinander eine Ethylengruppe der Formel $-CHR-CH_2-$ oder $CH_2-CHR-$, wobei R = H, Ethyl oder Methyl,
mindestens jedoch ein A des Alkyl-substituierten Ethylenamins der Formel I eine Alkylethylengruppe der Formel $-CHR-CH_2-$ oder $-CH_2-CHR-$, mit R = Ethyl oder Methyl, ist, und
mit n = 1 bis 4,
als Härter für die Herstellung von Epoxidharz-basierten Verbundmaterialien.

## Claims

**1.** A fiber-matrix composition having a fiber component consisting of reinforcing fibers and a matrix component comprising epoxy resin and curing agent, **characterized in that** the curing agent comprises at least one alkyl-substituted ethyleneamine of the formula I

$$H_2N\text{-}A\text{-}(NH\text{-}A\text{-})_nNH_2 \qquad (I)$$

where A is independently an ethylene group of the formula $-CHR-CH_2-$ or $CH_2-CHR-$, with R = H, ethyl or methyl, but at least one A of the alkyl-substituted ethyleneamine of the formula I is an alkylethylene group of the formula $-CHR-CH_2-$ or $-CH_2-CHR-$, with R = ethyl or methyl, and
where n = 1 to 4.

**2.** The fiber-matrix composition according to claim 1, where A is independently a methylethylene group of the formula $-CH(CH_3)-CH_2-$ or $CH_2-CH(CH_3)-$, and where n = 1 to 4.

**3.** The fiber-matrix composition according to claim 1, wherein the alkyl-substituted ethyleneamine is a dimethyldiethylenetriamine of the formula II

$$H_2N\text{-}A\text{-}NH\text{-}A\text{-}NH_2 \qquad (II)$$

where A is independently a methylethylene group of the formula $-CH(CH_3)-CH_2-$ or $-CH_2-CH(CH_3)-$.

**4.** The fiber-matrix composition according to any of claims 1 to 3, wherein the alkyl-substituted ethyleneamine accounts for at least 50% by weight, based on the total amount of the curing agents in the fiber-matrix composition.

**5.** The fiber-matrix composition according to any of claims 1 to 4, wherein the epoxy resin is selected from the group consisting of diglycidyl ether of bisphenol A, diglycidyl ether of bisphenol F, diglycidyl ether of hydrogenated bisphenol A and diglycidyl ether of hydrogenated bisphenol F, or mixtures thereof.

**6.** The fiber-matrix composition according to any of claims 1 to 5, wherein the reinforcing fibers are glass fibers or carbon fibers or mixtures thereof.

**7.** The fiber-matrix composition according to any of claims 1 to 6, wherein the reinforcing fibers have been impregnated with the matrix component.

**8.** A method of producing cured composite materials, which comprises providing and then curing the fiber-matrix composition according to any of claims 1 to 7.

**9.** The method according to claim 8, wherein the curing is effected at a temperature in the range from 70 to 180°C.

**10.** The method according to claim 8 or 9, wherein the fiber-matrix composition is provided by impregnating the reinforcing fibers with the matrix component.

**11.** The method according to claim 8, comprising the following steps:

a. arranging a multitude of reinforcing fibers to form a bundle,
b. pulling the bundle through an impregnating device to impregnate the reinforcing fibers in the bundle with the matrix component, and
c. pulling the bundle of impregnated reinforcing fibers through a second heating device in which the bundle is cured at a temperature in the range from 70 to 180°C to give a cured composite material.

**12.** The method according to claim 8, comprising the following steps:

a. impregnating one or more reinforcing fibers with the matrix component and then winding the one or more impregnated reinforcing fibers thus obtained onto a winding core to give an uncured composite material, and
b. curing the uncured composite material at a temperature in the range from 70 to 180°C to give a cured composite material.

**13.** The method according to any of claims 8 to 12, wherein the reinforcing fibers are used in the form of continuous fiber filaments, continuous fiber rovings or continuous fiber mats.

**14.** A cured composite material obtainable by the method according to any of claims 8 to 13.

**15.** A molding consisting of the cured composite material according to claim 14.

**16.** A rebar consisting of the cured composite material according to claim 14.

**17.** The use of alkyl-substituted ethyleneamine of the formula I

$$H_2N\text{-}A\text{-}(NH\text{-}A\text{-})_nNH_2 \qquad (I)$$

where A is independently an ethylene group of the formula $-CHR-CH_2-$ or $CH_2-CHR-$, where R = H, ethyl or methyl, but at least one A of the alkyl-substituted ethyleneamine of the formula I is an alkylethylene group of the formula $-CHR-CH_2-$ or $-CH_2-CHR-$, with R = ethyl or methyl, and with n = 1 to 4,
as curing agent for the production of epoxy resinbased composite materials.

**Revendications**

**1.** Composition de matrice de fibres, comportant un composant de type fibres, constitué de fibres de renforcement, et un composant de type matrice qui comprend une résine époxy et un agent de durcissement, **caractérisée en ce que** l’agent de durcissement comprend au moins une éthylèneamine substituée par alkyle de formule I,

$$H_2N\text{-}A\text{-}(NH\text{-}A\text{-})_nNH_2 \qquad (I),$$

A étant indépendamment l’un de l’autre un groupe éthylène de formule $-CHR-CH_2-$ ou $CH_2-CHR-$, avec R = H, éthyle ou méthyle, cependant au moins un A de l’éthylèneamine substituée par alkyle de formule I étant un groupe alkyléthylène de formule $-CHR-CH_2-$ou $CH_2-CHR-$, avec R = éthyle ou méthyle, et
n = 1 à 4.

**2.** Composition de matrice de fibres selon la revendication 1,

A étant indépendamment l’un de l’autre un groupe méthyléthylène de formule $-CH(CH_3)-CH_2-$ ou $CH_2-CH(CH_3)-$,

et
n = 1 à 4.

**3.** Composition de matrice de fibres selon la revendication 1, l'éthylèneamine substituée par alkyle étant une diméthyldiéthylènetriamine de formule II,

$$H_2N\text{-}A\text{-}NH\text{-}A\text{-}NH_2 \qquad (II),$$

A étant indépendamment l'un de l'autre un groupe méthyléthylène de formule $-CH(CH_3)-CH_2-$ ou $CH_2-CH(CH_3)-$.

**4.** Composition de matrice de fibres selon l'une quelconque des revendications 1 à 3, l'éthylèneamine substituée par alkyle représentant au moins 50 % en poids, par rapport à la quantité totale de l'agent de durcissement dans la composition de matrice de fibres.

**5.** Composition de matrice de fibres selon l'une quelconque des revendications 1 à 4, la résine époxy étant choisie dans le groupe constitué par l'éther de diglycidyle de bisphénol A, l'éther de diglycidyle de bisphénol F, l'éther de diglycidyle de bisphénol A hydrogéné et l'éther de diglycidyle de bisphénol F hydrogéné, ou des mélanges correspondants.

**6.** Composition de matrice de fibres selon l'une quelconque des revendications 1 à 5, les fibres de renforcement étant des fibres de verre ou des fibres de carbone ou des mélanges correspondants.

**7.** Composition de matrice de fibres selon l'une quelconque des revendications 1 à 6, les fibres de renforcement étant imprégnées avec le composant de type matrice.

**8.** Procédé de préparation de matériaux composites durcis, **caractérisé en ce que** la composition de matrice de fibres selon l'une quelconque des revendications 1 à 7 est fournie et ensuite durcie.

**9.** Procédé selon la revendication 8, le durcissement étant réalisé à une température dans la plage de 70 à 180 °C.

**10.** Procédé selon la revendication 8 ou 9, la fourniture de la composition de matrice de fibres étant réalisée par imprégnation des fibres de renforcement avec le composant de type matrice.

**11.** Procédé selon la revendication 8, comprenant les étapes suivantes :

a. disposition d'une pluralité de fibres de renforcement en un paquet,
b. tirage du paquet à travers un dispositif d'imprégnation, les fibres de renforcement du paquet étant imprégnées avec le composant de type matrice, et
c. tirage du paquet de fibres de renforcement imprégnées à travers un deuxième dispositif de chauffage, dans lequel le paquet est durci à une température dans la plage de 70 à 180 °C pour donner un matériau composite durci.

**12.** Procédé selon la revendication 8, comprenant les étapes suivantes :

a. imprégnation d'une ou plusieurs fibres de renforcement avec le composant de type matrice et ensuite enroulement de la ou des fibres de renforcement imprégnées ainsi obtenues sur un noyau d'enroulement pour donner un matériau composite non durci, et
b. durcissement du matériau composite non durci à une température dans la plage de 70 à 180 °C pour donner un matériau composite durci.

**13.** Procédé selon l'une quelconque des revendications 8 à 12, les fibres de renforcement étant utilisées sous forme de filaments de fibres sans fin, de torons de fibres sans fin ou de mats de fibres sans fin.

**14.** Matériau composite durci, **caractérisé en ce qu'**il peut être obtenu par le procédé selon l'une quelconque des revendications 8 à 13.

**15.** Corps moulé, **caractérisé en ce qu'**il est constitué du matériau composite durci selon la revendication 14.

**16.** Barre d'armature, **caractérisée en ce qu'**elle est constituée du matériau composite durci selon la revendication 14.

**17.** Utilisation d'une éthylèneamine substituée par alkyle de formule I,

$$H_2N\text{-}A\text{-}(NH\text{-}A\text{-})_nNH_2 \qquad (1),$$

A étant indépendamment l'un de l'autre un groupe éthylène de formule $-CHR-CH_2-$ ou $CH_2-CHR-$, avec R = H, éthyle ou méthyle,
cependant au moins un A de l'éthylèneamine substituée par alkyle de formule I étant un groupe alkyléthylène de formule $-CHR-CH_2-$ ou $CH_2-CHR-$, avec R = éthyle ou méthyle, et
n = 1 à 4,
en tant qu'agent de durcissement pour la préparation de matériaux composites à base de résine époxy.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2307358 A
- WO 2016177533 A
- EP 0133154 A1


### In der Beschreibung aufgeführte Nicht-Patentliteratur


- **EPOXY RESINS ; H. PHAM ; M. MARKS.** Ullmann's Encyclopedia of Industrial Chemistry. Wiley-VCH, 15. Oktober 2005, vol. 13
- **LEE ; NEVILLE.** Handbook of Epoxy Resins. 1967, 12-36
- III Kirpichnikovskie Chteniya. Materialy Yubileinoi Nauchno-Metodicheskoi Konferentsi. 25. Marz 2003, 473-475
- **B. BURTON et al.** Epoxy Formulations using Jeffamine Polyetheramines. Huntsman, 27. April 2005, 8-11